(19) Europäisches Patentamt / European Patent Office / Office européen des brevets

(11) **EP 3 105 922 B1**

(12) **EUROPEAN PATENT SPECIFICATION**

(45) Date of publication and mention
of the grant of the patent:
**04.04.2018  Bulletin 2018/14**

(21) Application number: **15704944.6**

(22) Date of filing: **10.02.2015**

(51) Int Cl.:
***H04N 7/01*** *(2006.01)*

(86) International application number:
**PCT/US2015/015187**

(87) International publication number:
**WO 2015/120443 (13.08.2015 Gazette 2015/32)**

(54) **INVERSE TELECINE FILTER**

INVERSER TELECINE-FILTER

FILTRE DE TÉLÉCINÉMA INVERSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2014  US 201461938100 P**

(43) Date of publication of application:
**21.12.2016  Bulletin 2016/51**

(73) Proprietor: **InterDigital Patent Holdings, Inc.
Wilmington, DE 19809 (US)**

(72) Inventors:
• **REZNIK, Yuriy**
**Seattle, Washington 98121 (US)**
• **ASBUN, Eduardo**
**San Diego, CA 92130 (US)**

(74) Representative: **Heinze, Ekkehard
Meissner Bolte Patentanwälte
Rechtsanwälte Partnerschaft mbB
Widenmayerstraße 47
80538 München (DE)**

(56) References cited:
**EP-A2- 0 612 187     US-A- 5 757 435**

**Description**

**CROSS REFERENCE TO RELATED APPLICATIONS**

**BACKGROUND**

Telecine may refer a technique used to convert film to video. Film material may be recorded at 24 frames per second, while National Television System Committee (NTSC) video may be recorded at 59.94 Hz vertical scanning frequency or 59.94 fields per second and displayed at 29.97 Hz frame rate of interlaced fields US-A-5 757 435 discloses an inverse telecine method wherein a detected repeat field is dropped.

SUMMARY

Systems, methods, and instrumentalities are disclosed to filter video. A plurality of frames may be converted to a plurality of fields. A field may be of an even parity. A field may be of an odd parity. A series of fields may contain at least one superfluous field (*e.g.*, a series of even parity fields may contain at least one superfluous field, and a series of odd parity fields may contain at least one superfluous field). Comparing each field to at least one temporally adjacent field (in the same parity or in an opposing parity) may determine a pair of fields which are most similar to each other. A pair of such fields may comprise the superfluous field. The superfluous field may be a field of the pair of fields which is least similar to a respective temporally adjacent field (*e.g.*, a field that is not the other of the pair of fields, and which may be a temporally adjacent field of the same parity). The superfluous field may be designated as the superfluous field. The plurality of frames may be reconstructed (*e.g.*, from the plurality of fields without the determined superfluous field).

Methods, servers, filters, and displays comprising video filtering may comprise receiving and decoding a video sequence (*e.g.*, an encoded video sequence) comprising a plurality of fields. A field of the plurality of fields may be one of an even parity field and an odd parity field. A field of the plurality of fields may include a superfluous field (*e.g.*, a repeated or redundant field as a result of telecine). Comparing each field to at least one temporally adjacent field of the same parity may determine a pair of fields which are most similar to each other. The pair of fields comprise the superfluous field (e.g., one of the fields in the pair is a superfluous fields). Which of the pair of fields is the superfluous field may be determined by determining which of the pair of fields is least similar to a respective temporally adjacent field (*e.g.*, of the same parity) that is not the other of the pair of fields. The video sequence may be reconstructed without the determined superfluous field. The video sequence may be re-encoded without the determined superfluous field.

**BRIEF DESCRIPTION OF THE DRAWING**

FIG. 1A is a system diagram of an example communications system in which one or more disclosed embodiments may be implemented.

FIG. 1B is a system diagram of an example wireless transmit/receive unit (WTRU) that may be used within the communications system illustrated in FIG. 1A.

FIG. 1C is a system diagram of an example radio access network and an example core network that may be used within the communications system illustrated in FIG. 1A.

FIG. 1D is a system diagram of another example radio access network and another example core network that may be used within the communications system illustrated in FIG. 1A.

FIG. 1E is a system diagram of another example radio access network and another example core network that may be used within the communications system illustrated in FIG. 1A.

FIG. 2 is a diagram of an example relation between film (*e.g.*, frame) and interlaced video (*e.g.*, fields).

FIG. 3 is a diagram of an example of a 2:3 pulldown.

FIG. 4 is a diagram of an example of a 2:3 pulldown.

FIG. 5 is a diagram of an example of a 2:3 pulldown.

FIG. 6 is a diagram of an example of inverse telecine by field removal.

FIG. 7 is a diagram of an example of inverse telecine using field averaging.

FIG. 8 is a diagram of an example video encoding and decoding process that introduces visual artifacts to reconstructed fields.

FIG. 9 is a diagram of an example of how to identify a 2:3 pulldown pattern.

FIG. 10 is a diagram of an example of how to determine which of the repeated fields may be retained.

FIG. 11 is a diagram of an example of a prior-art inverse telecine, an inverse telecine as described herein, and an inverse telecine as described herein with post-filtering (fc = 0.5).

FIG. 12 is a diagram of an example of a prior-art inverse telecine, an inverse telecine as described herein, and an inverse telecine as described herein with post-filtering (fc = 0.5).
FIG. 13 is a diagram of an example of a prior-art inverse telecine, an inverse telecine as described herein, and an inverse telecine as described herein with post-filtering (fc = 0.5).

**DETAILED DESCRIPTION**

A detailed description of illustrative embodiments will now be described with reference to the various Figures. Although this description provides a detailed example of possible implementations, it should be noted that the details are intended to be exemplary and in no way limit the scope of the application.

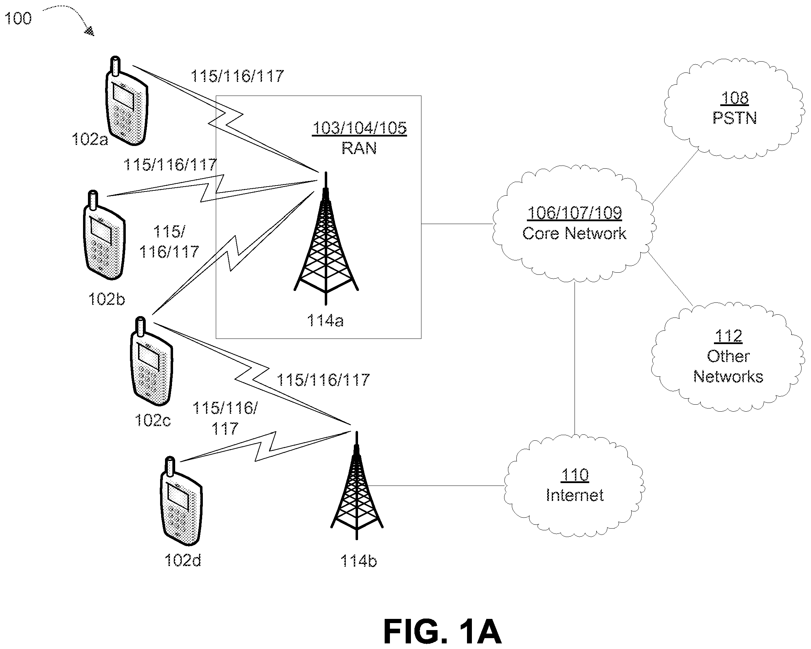

FIG. 1A is a diagram of an example communications system 100 in which one or more disclosed embodiments may be implemented. The communications system 100 may be a multiple access system that provides content, such as voice, data, video, messaging, broadcast, *etc.*, to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, *etc.* The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, e.g., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 115/116/117, which may be any suitable wireless communication link (*e.g.*, radio frequency (RF), microwave, infrared (IR), ultraviolet (UV), visible light, *etc.*). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c may implement a radio technology such as Universal Mobile Telecommunications System (UMTS) Terrestrial Radio Access (ULTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 115/116/117 using Long Term Evolution (LTE) and/or LTE-Advanced(LTE-A).

In other embodiments, the base station 114a and the WTRUs 102a, 102b, 102c may implement radio technologies such as IEEE 802.16 (*e.g.*, Worldwide Interoperability for Microwave Access (WiMAX)), CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERMAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (*e.g.*, WCDMA, CDMA2000, GSM, LTE, LTE-A, *etc.*) to establish a picocell or femtocell. As shown in FIG. 1A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, *etc.*, and/or perform high-level security functions, such as user authentication. Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities, *e.g.*, the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

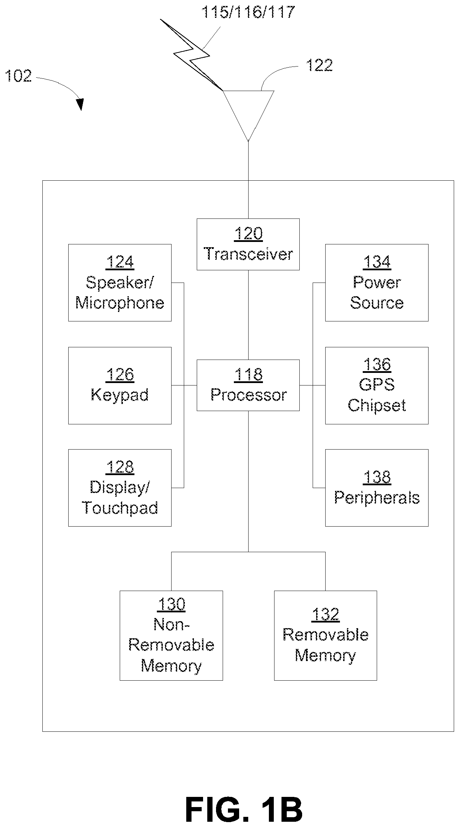

FIG. 1B is a system diagram of an example WTRU 102. has shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home nod-B (eNodeB), a home evolved node-B (HeNB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (*e.g.*, the base station 114a) over the air interface 115/116/117. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (*e.g.*, multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as ULTRA and IEEE 802.11, for example.

The processor 118 of the WTRU 102 may be coupled to, and may receive user input data from, the speaker/microphone 124, the keypad 126, and/or the display/touchpad 128 (*e.g.*, a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (*e.g.*, nickel-cadmium (NiCd), nickel-zinc (NiZn), nickel metal hydride (NiMH), lithium-ion (Li-ion), *etc.*), solar cells, fuel cells, and the like.

The processor 118 may also be coupled to the GPS chipset 136, which may be configured to provide location information (*e.g.*, longitude and latitude) regarding the current location of the WTRU 102. In addition to, or in lieu of, the information from the GPS chipset 136, the WTRU 102 may receive location information over the air interface 115/116/117 from a base station (*e.g.*, base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

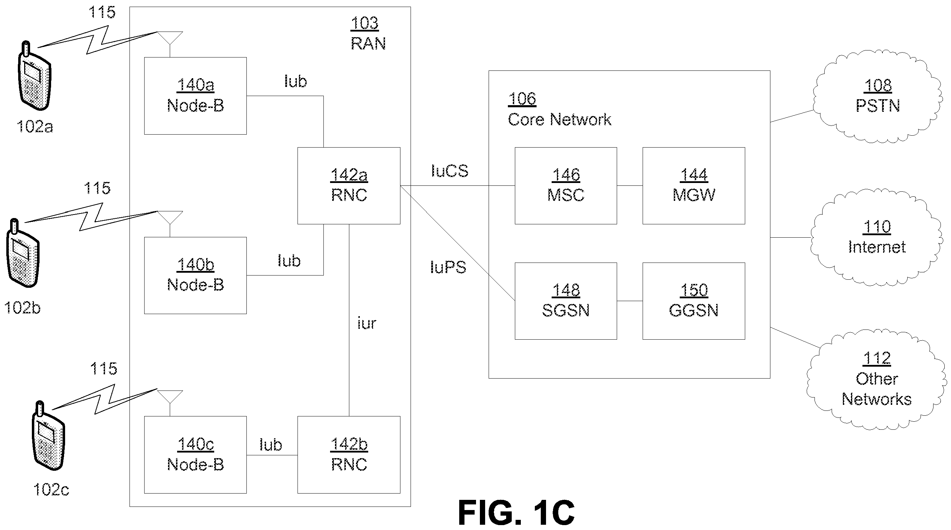

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. has shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

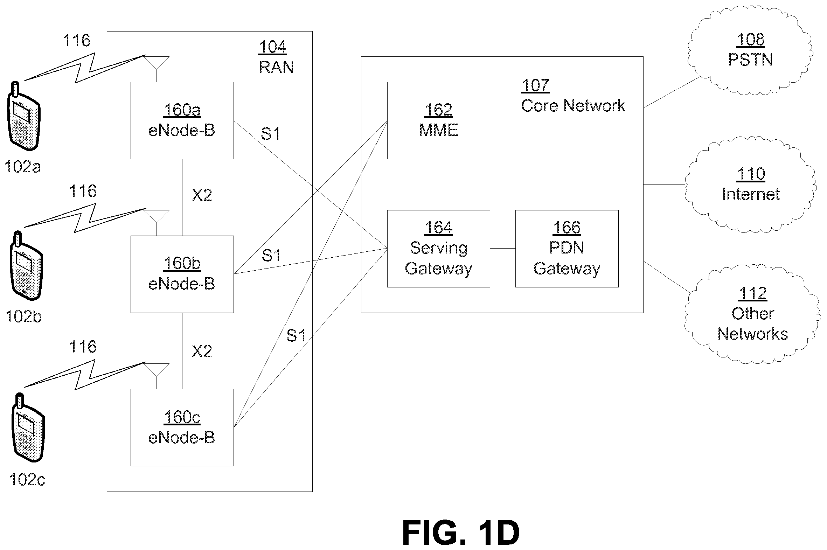

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink and/or downlink, and the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 142a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (*e.g.*, an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

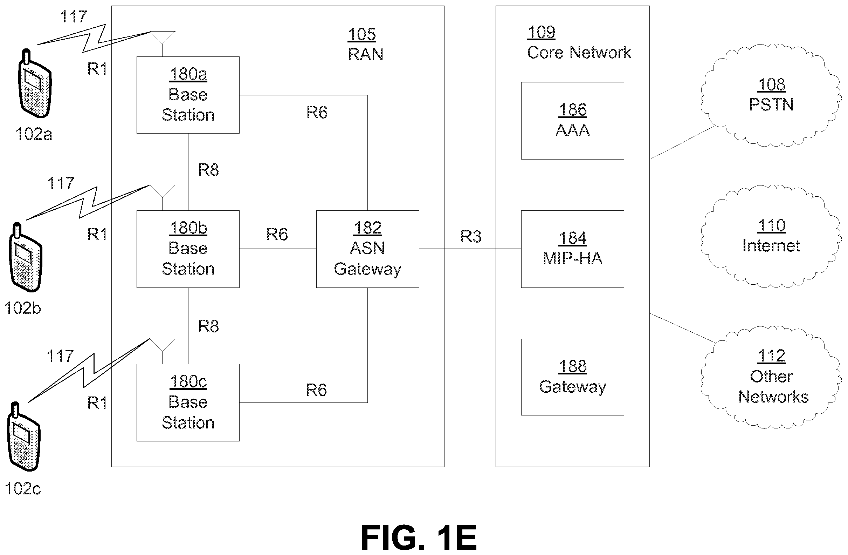

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. 1E, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 142a, 102b, 102c over the air interface 117. In one embodiment, the base stations 180a, 180b, 180c may implement MIMO technology. Thus, the base station 180a, for example, may use multiple antennas to transmit wireless signals to, and receive wireless signals from, the WTRUs 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. 1E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. 1E, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

One or more embodiments described herein may be used in video processing systems, video display systems, and/or video compression systems.

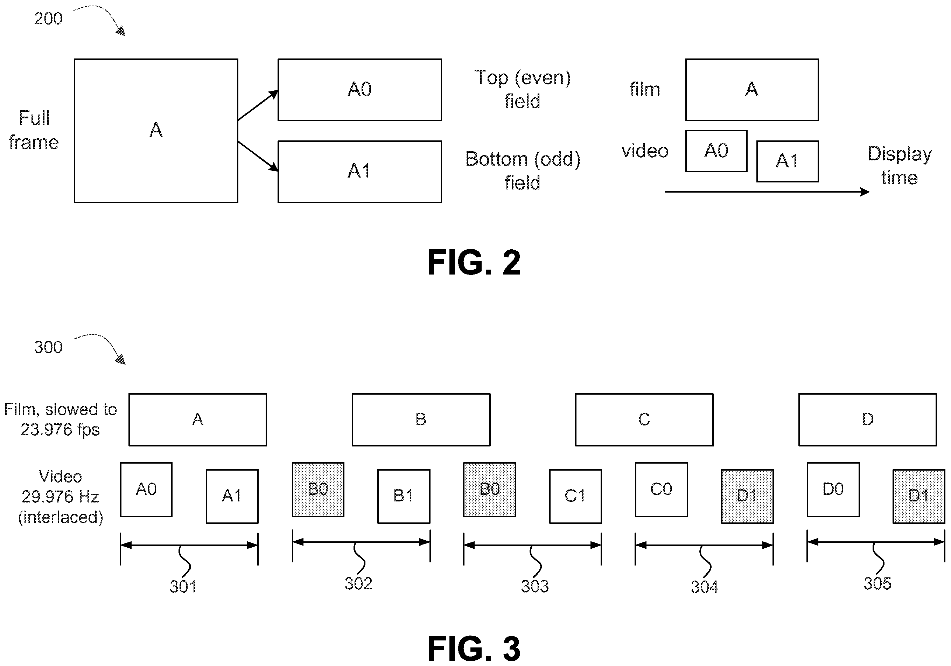

Turning to FIG. 2, an inverse telecine filter may be provided. An inverse telecine filter may be used to perform inverse telecine transformation of encoded video, which may enable accurate reconstruction of the original progressive video. The presence of repeated fields (*e.g.,* wherein one field of the repeated pair is redundant or superfluous) in telecined video may be identified, along with the versions of these fields that may be less affected by coding artifacts.

FIG. 2 is a diagram 200 of an example relation between film A (*e.g.,* one or more frames) and interlaced video A0 and A1 (*e.g.,* one or more fields). Interlaced may refer to lines (*e.g.,* rows of pixels in a film frame) numbered sequentially from top to bottom and partitioned into two sets: even-numbered lines (*e.g.,* which may be referred to as top, even, and/or 0 field) and odd-numbered lines (*e.g.,* which may be referred to as bottom, odd, and/or 1 field). The two fields of a video frame may be displayed at two different times, for example, as shown in FIG. 2. The top (*e.g.,* even) field A0 may be rendered before the bottom (*e.g.,* odd) field A1, for example as shown in FIG. 2, or vice versa. Top-field-first (tff) patterns and/or bottom-field-first (bff) patterns may be used.

When film is transferred to a video format (*e.g.*, NTSC video), a conversion technique which may be referred to as telecine may be used. One or more variations of telecine techniques may be used, for example, the 2:3 pulldown or 3:2 pulldown technique.

FIG. 3 is a diagram 300 of an example of a 2:3 pulldown technique. The 2:3 pulldown telecine may slow down the film by approximately 0.1% to 23.976 frames per second. The 2:3 pulldown technique may distribute four progressive frames of film (A, B, C, D) into five interlaced video frames 301-305 at 29.97 Hz. Each of the five interlaced video frames may comprise two video fields (for example, a top, even, and/or 0 field and a bottom, odd, and/or 1 field). This may produce ten video fields (for example, an even field A0, B0, B0, C0, and D0, and an odd field A1, B1, C1, D1, and D1). As the four film frames are partitioned into five top fields and five bottom fields, one or more (*e.g.,* two) of the fields may be repeated. It is understood that when a field is repeated, one of the pair is superfluous (*e.g.,* redundant). For example, B0 and D1 may be repeated in FIG. 3. In such case, one of the repeated field (*e.g.,* top, even, and/or 0 field) pair (B0 and B0 is superfluous (*e.g.,* redundant). One of the repeated field (*e.g.,* bottom, odd, and/or 1 field) pair (D1 and D1) is superfluous (*e.g.*, redundant).

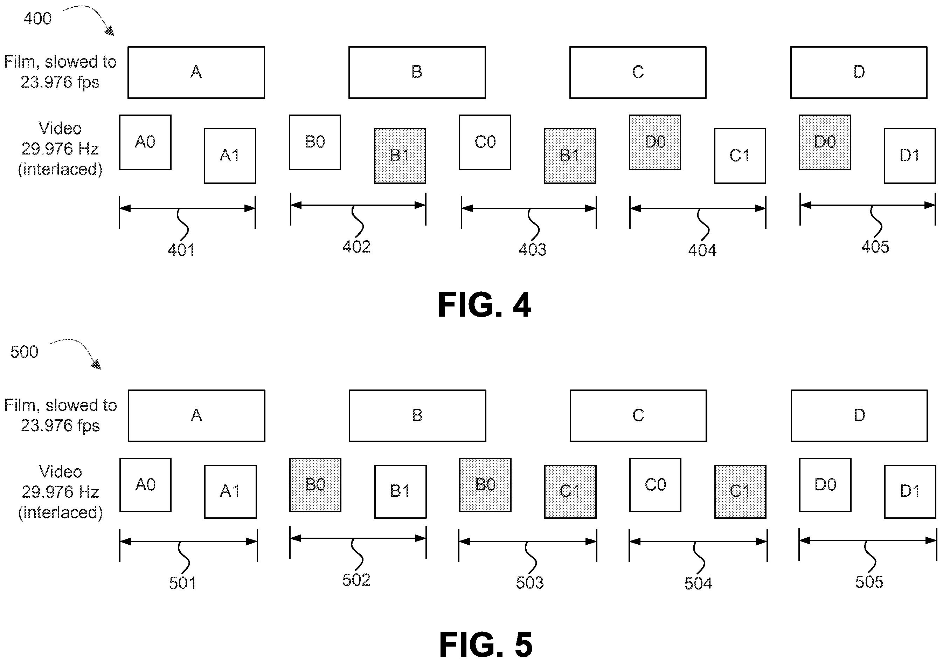

FIG. 4 is a diagram 400 of an example of a 2:3 pulldown. The 2:3 pulldown telecine may slow down the film by approximately 0.1% to 23.976 frames per second. The 2:3 pulldown technique may distribute four progressive frames of film (A, B, C, D) into five interlaced video frames 401-405 at 29.97 Hz. Each of the five interlaced video frames may comprise two video fields (for example, a top, even, and/or 0 field and a bottom, odd, and/or 1 field). This may produce ten video fields (for example, an even field A0, B0, C0, D0, and D0, and an odd field A1, B1, B1, C1, and D1). As the four film frames are partitioned into five top fields and five bottom fields, one or more (*e.g.*, two) of the fields may be repeated. It is understood that when a field is repeated, one of the pair is superfluous (*e.g.*, redundant). For example, D0 and B1 may be repeated in FIG. 4. In such case, one of the repeated field (*e.g.*, top, even, and/or 0 field) pair (D0 and D0) is superfluous (*e.g.*, redundant). One of the repeated field (*e.g.*, bottom, odd, and/or 1 field) pair (B1 and B1) is superfluous (*e.g.*, redundant).

FIG. 5 is a diagram 500 of an example of a 2:3 pulldown. The 2:3 pulldown telecine may slow down the film by approximately 0.1% to 23.976 frames per second. The 2:3 pulldown technique may distribute four progressive frames of film (A, B, C, D) into five interlaced video frames 501-505 at 29.97 Hz. Each of the five interlaced video frames may comprise two video fields (for example, a top, even, and/or 0 field and a bottom, odd, and/or 1 fields). This may produce ten video fields (for example, an even field A0, B0, B0, C0, and D0, and an odd field A1, B1, C1, C1, and D1). As the four film frames are partitioned into five top fields and five bottom fields, one or more (*e.g.*, two) of the fields may be repeated. It is understood that when a field is repeated, one of the pair is superfluous (*e.g.*, redundant). For example, B0 and C1 may be repeated in FIG. 5. In such case, one of the repeated field (*e.g.,* top, even, and/or 0 field) pair (B0 and B0) is superfluous (*e.g.*, redundant). One of the repeated field (*e.g.*, bottom, odd, and/or 1 field) pair (C1 and C1) is superfluous (*e.g.*, redundant).

When performing 2:3 pulldown, mixed or dirty video frames may be created. A mixed or dirty frame may refer to a video frame that includes fields from adjacent film frames, for example, instead of the same film frames. For example, frames 303 and 304 of FIG. 3 may be mixed or dirty frames. Frames 403 and 404 of FIG. 4 may be mixed or dirty frames. Frame 503 of FIG. 5 may be a mixed or dirty frame.

An inverse telecine process may be provided. There may be benefits to detect and remove telecine in decoded video sequences. For example, non-interlaced displays (*e.g.*, computer monitors, digital TVs, *etc.*) may show higher quality non-interlaced content. Removing mixed or dirty frames may improve results of video compression and/or processing techniques (*e.g.*, filtering) that may be applied to decoded video.

A search for repeated (*e.g.*, redundant or superfluous) fields may be performed. Fields from adjacent video frames may be compared to determine the 2:3 pulldown telecine patterns. For example, this may be done sequentially by examining frames of the interlaced video and keeping track of pair-wise differences between even and odd fields in a last number of frames (*e.g.*, in the last 5-10 frames). The instances in which pair-wise differences are smaller than usual frame-wise differences may be suspected to be repetitive (*e.g.*, redundant or superfluous) fields. If such instances form a systematic pattern with a periodicity of 5 frames, then the instances may be determined to be telecine generated.

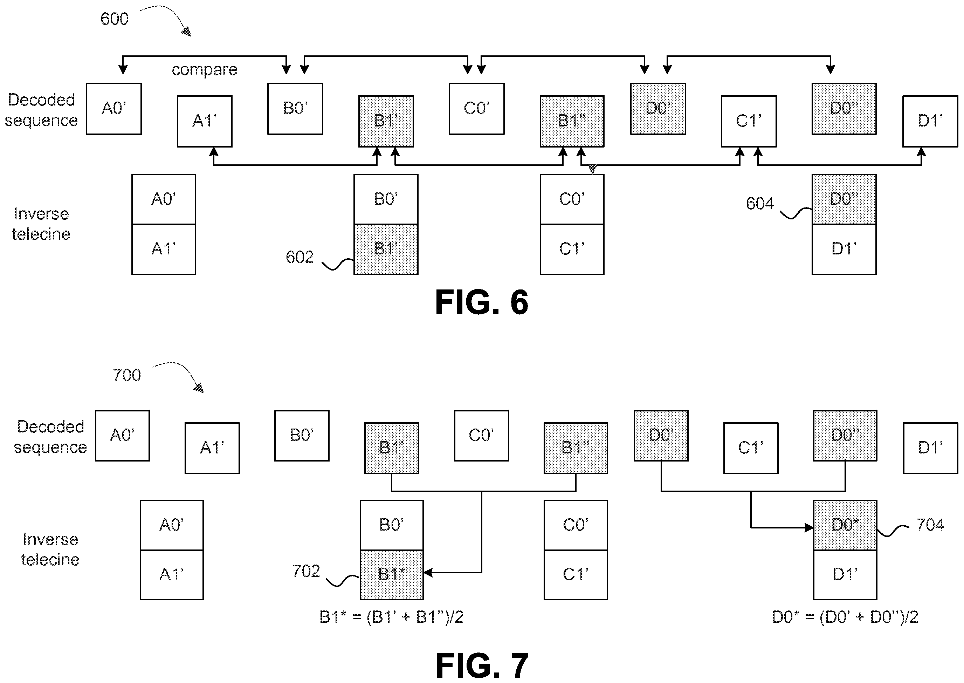

FIG. 6 is a diagram 600 of an example of inverse telecine by field removal. Repeated (*e.g.,* redundant or superfluous) fields may be removed. An inverse telecine technique may include the removal of fields that are repeated (*e.g.*, redundant or superfluous). For example, fields B1' and B1" may be identified as being repeated fields. Repeated field B1" may be determined to be a superfluous field and removed, thus field B1' 602 may be left in the output sequence (*e.g.,* the result from inverse telecine). For example, fields D0' and D0" may be identified as being repeated fields. Repeated field D0' may be determined to be a superfluous field and removed, thus field D0" 604 may be left in the output sequence (*e.g.,* the result from inverse telecine). Frame C0'|C1' may be reconstructed by combining even and/or odd fields and dropping the superfluous fields, for example, B1" and D0'.

FIG. 7 is a diagram 700 of an example of inverse telecine using field averaging. Field averaging may be performed. One or more repeated fields may be averaged. Field averaging may provide a better quality of reconstruction, because for example, fields may have been encoded & reconstructed, and the fields may include different reconstruction errors. Field averaging may reduce such reconstruction errors. As an example, B1' and B1" may be repeated fields in an odd field (*e.g.*, bottom field or 1 field). In the output sequence (*e.g.*, the result from inverse telecine), a field B1* 702 may be provided that is an average between B1' and B1" (for example, $B1^* = (B1' + B1")/2$). D0' and D0" may be repeated fields in an even field (*e.g.,* top field or 0 field). In the output sequence (*e.g.*, the result from inverse telecine), a field D0* 704 may be provided that is an average between D0' and D0" (for example, $D0^* = (D0' + D0")/2$).

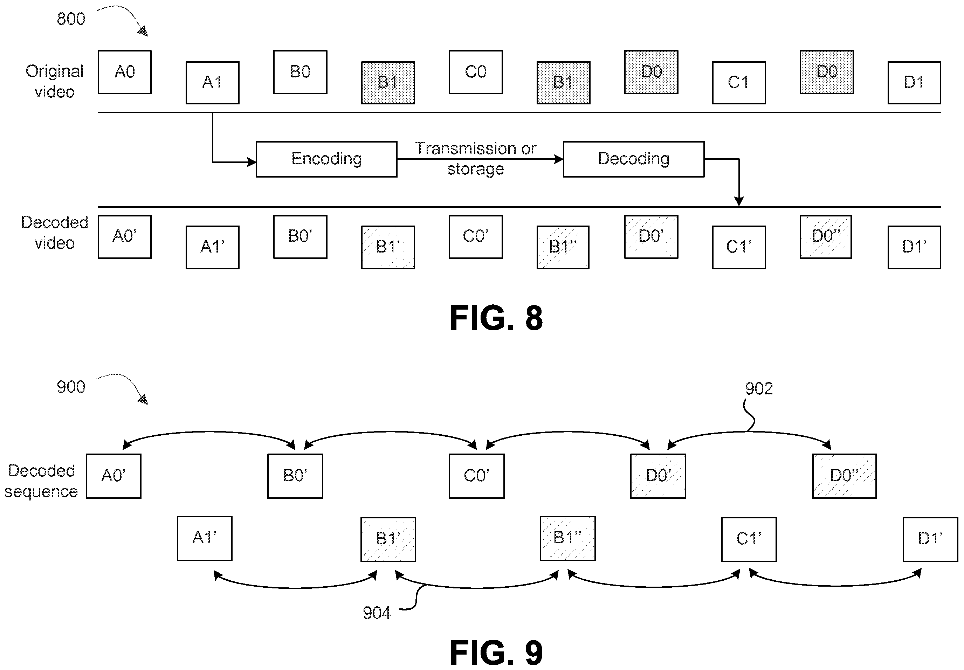

FIG. 8 is a diagram 800 of an example video encoding and decoding process. Encoding and decoding may introduce visual artifacts to reconstructed fields. A decoded video stream may be edited and/or may include inserted advertisements (*e.g.*, which may alter the telecine pattern). Reconstructed fields of a decoded video stream may be affected by coding artifacts due to compression (*e.g.*, encoding of the video stream). Coding artifacts may occur because in order to compress a video sequence for transmission and/or storage, information that may be visually significant may be lost. Compression may introduce visual artifacts, for example, such as blocking and quantization noise. Depending on the amount of compression, artifacts may be introduced in reconstructed frames.

A filter, server, and/or display device may receive (*e.g.*, via a processor) an encoded video sequence. The filer, server, and/or display device may comprise a processor, which for example, may perform one or more of the functions described herein. The filter may comprise one or more video filters (*e.g.*, one or more video post-filters). The server may comprise a content server. The filter, serve, and/or display device (*e.g.*, via the processor) may decode the encoded video sequence. The decoded video sequence may comprise a plurality of fields. A frame may be represented by an even parity field (*e.g.,* top, even, and/or 0 field) and an odd parity field (*e.g.*, bottom, odd, and/or 1 field). The even field and/or the odd field (decoded video sequence) may comprise a series of fields (*e.g.,* the fields A0'-D0" and/or the fields A1'-D1'). At least one field in the series of fields may be a superfluous field.

Reconstructed (*e.g.*, decoded) fields A0'-D0" and A1'-D1' may not be identical to original fields A0-D0 and A1-D1 after encoding, transmission/storage, and decoding. For example, decoded fields may not be the same as the corresponding frame data in the original video. Moreover, even reconstructed repeated fields may not be identical to each other (*e.g.*, in addition to not being identical to the original repeated fields). For example, repeated fields B1' and B1" may not be identical to each other or to original repeated field B1. Repeated fields B1' and B1" may contain varying amounts of artifacts. Repeated fields B1' and B1" may not yield identical levels of quality for a reconstructed frame. Repeated fields B1' and/or B1" in the decoded video may be predicted from different reference fields. B1' may be intracoded while B1" may be motion predicted, for example, or vice versa. The result may be that the difference between B1' and B1" may be significant. A resulting non-interlaced frame may exhibit visible visual artifacts.

Repeated fields D0' and D0" may not be identical to each other or to original repeated field D0. Repeated fields D0' and D0" may contain varying amounts of artifacts. Repeated fields D0' and D0" may not yield identical levels of quality for a reconstructed frame.

Inverse telecine transformation of encoded video enabling more accurate reconstruction of the original progressive video may be performed. The effects of video compression may be reduced, for example, by identifying the repeated field (*e.g.,* by identifying the superfluous field in a repeated pair) in the decoded sequence that most closely resembles the original sequence. An inverse telecine technique may be performed by identifying the pulldown pattern (*e.g.*, 2:3 pulldown pattern), and determining and/or combining repeated fields to create a reconstructed frame.

Identifying the pulldown pattern may be provided. Although described with reference to a 2:3 pulldown pattern, the embodiments described herein may be applied to any pulldown pattern.

FIG. 9 is a diagram 900 of an example of a method to identify a 2:3 pulldown pattern, or to determine a pair of fields that are most similar to each other. To identify the 2:3 pulldown pattern, top and/or bottom fields (*e.g.*, adjacent top and/or bottom fields) may be compared. For example, mean squared error (MSE) may be used to compare adjacent fields (*e.g.*, temporally adjacent fields) in the top field (*e.g.*, MSE(A0',B0'), MSE(B0',C0'), MSE(C0',D0'), MSE(D0',D0")). A pair of fields with the lowest MSE 902 in the top field may be identified (*e.g.*, D0' and D0"). The pair of fields with the lowest MSE may comprise the repeated fields. Other methods may be used to compare adjacent fields in the top field. MSE may be used to compare adjacent fields in the bottom field (*e.g.*, MSE(A1',B1"), MSE(B1',B1"), MSE(B1",C1'), MSE(C1',D1')), A pair of fields with the lowest MSE 904 in the bottom field may be identified (*e.g.*, B1' and B1"). The pair of fields with the lowest MSE may comprise the repeated fields. Other methods may be used to compare adjacent fields in the bottom field. For example, metrics other than MSE may be used to compare adjacent fields to determine a pair of fields that are most similar to each other.

The identity of the repeated fields may be used to determine the 2:3 pulldown pattern. Once identified, a 2:3 pulldown pattern may be assumed to remain constant. A pulldown pattern may be assumed to change due to editing, ad insertion, and/or the like, and so MSE may be tracked throughout the sequence and the pattern may be adjusted, for example, as needed.

MSE may be a used in video coding techniques, such as motion estimation, for example, for objectively comparing video frames and/or video fields. MSE may track visual disparity. For example, a low MSE may be an indication that frames and/or fields are well matched, which for example, may reduce the possibility of misidentification. The following equation (Equation 1) may be used to identify the pulldown pattern (*e.g.*, the 2:3 pulldown pattern):

$$MSE(X,Y) = \frac{1}{n} \sum_{i=0}^{width} \sum_{j=0}^{height} (x_{i,j} - y_{i,j})^2 \qquad \text{Equation 1}$$

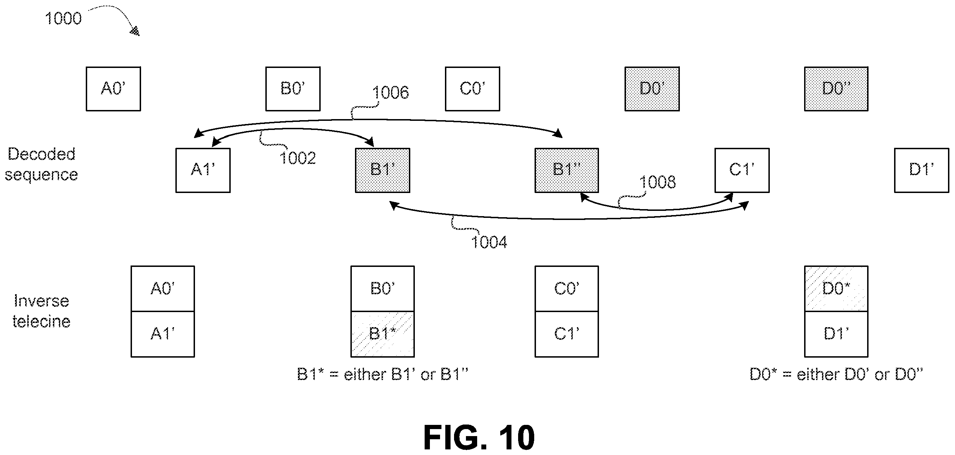

FIG. 10 is a diagram 1000 of an example of how to determine which of the repeated fields (for example, the more preferable of the repeated fields) may be selected. After identifying two or more (*e.g.*, a pair) of repeated fields, the repeated field that minimizes distortion may be selected and the other repeated of the pair may be considered superfluous.

The repeated fields that minimize distortion may be the fields that minimize the expected distortion relative to the corresponding original field(s). For example, since there may be two or more repeated fields, the repeated field that minimizes distortion may be determined and selected using a reference field for comparison.

A first parity series of fields (*e.g.*, top, even, and/or 0 field)) may comprise A0', B0', C0', D0', and D0". D0' and D0" may be identified as repeated pair as described herein. In the inverse telecine, either D0' or D0" will be selected and the other field will be superfluous. The selected field (*e.g.*, the field that minimizes distortion) may be represented as D0*.

A second parity series of fields (*e.g.*, bottom, odd, and/or 1 field) may comprise A1', B1', B1'', C1', and D1'. B1' and B1'' may be identified as repeated pair as described herein. In the inverse telecine, either B1' or B1'' will be selected and the other field will be superfluous. The selected field (*e.g.*, the field that minimizes distortion) may be represented as B1*.

For example, each of field B1' and B1'' may be compared to their adjacent (*e.g.*, temporally adjacent) fields in the bottom field (*e.g.,* same parity). B1' may be compared to A1' 1002. B1' may becompared to C1' 1004. B1'' may be compared to A1' 1006. B1'' may be compared to C1' 1008. The superfluous field may be selected by determining which of the pair of fields is least similar to its respective adjacent field(s). For example, when selecting the superfluous field, the similarity between adjacent fields may be determined by calculating the distortion between the adjacent field and its temporal neighbor (*e.g.*, using a metric, such as but not limited to, MSE).

A set of possible reference fields (*e.g.*, A1' and C1' in FIG. 10) for the repeated fields (*e.g.,* B1' and/or B1'' in FIG. 10) may be determined. A best reference field may be selected from the set of possible reference fields. For example, a reference field may be determined by calculating the distortion (*e.g.*, MSE) of each of the possible reference fields relative to the repeated fields and determining a reference field that minimizes distortion. For example, for FIG. 10 the best reference field for the repeated fields {B1', B1''} may be determined using the following equation (Equation 2):

$$\text{if } (\, MSE(A1', B1') + MSE(A1', B1'') \,) \, < \, (\, MSE(C1', B1') + MSE(C1', B1'') \,)$$
$$\text{A1' is selected as the best reference} \qquad\qquad \text{Equation 2}$$
$$\text{Otherwise } (e.g., \text{ if } (\, MSE(A1', B1') + MSE(A1', B1'') \,) >$$
$$(\, MSE(C1', B1') + MSE(C1', B1'') \,))$$
$$\text{C1' is selected as the best reference}$$

A reference field may refer to the field that may be used as a surrogate for the original field.

For example, for a given set of repeated fields, the comparison may be performed against one or more of the closest (*e.g.*, temporally closest) fields of the same parity. For example, for repeated fields B1' and B1'' of FIG. 10, the comparison may be performed by determining the reference field from the set of A1' and C1'. The comparison may be performed against one or more of the closest (*e.g.*, temporally closest) fields of the opposite parity. For example, for repeated fields B1' and B1'' of FIG. 10, the comparison may be performed by determining the reference from the set of B0', C0', and D0'.

The comparison may be performed over a search window of size N against one ormore fields of one or more of the parities. For example, the comparison may be performed against the fields (*e.g.,* all fields) that are within a distance of two field positions (N=2) of the detected repeated fields. For example, for repeated fields B1' and B1'' of FIG. 10, the comparison may be performed by determining the reference from the set of A1', B0', C0', D0', and C1'.

The repeated field that minimizes distortion relative to the best reference field may be determined and this field may be selected for use in the reconstruction of the original progressive video sequence. For example, the selected field which minimizes distortion may be determined using the following equation (Equation 3):

$$B1^* = \begin{cases} B1' & if \;\; MSE \,(best\ reference, B1') \le MSE \,(best\ reference, B1'') \\ B1'' & if \;\; MSE \,(best\ reference, B1') > MSE \,(best\ reference, B1'') \end{cases} \quad \text{Equation 3}$$

A repeated field may be selected using quantization values. A video bitstream which encodes the fields may be analyzed to determine the quantization values. The selection of a repeated field that minimizes distortion may be done by evaluating quantization scale parameters used to encode a (*e.g.,* each) macroblock of the repeated fields. A lower quantization scale parameter may indicate that fields and/or frames have lower quantization error, they are less affected by coding artifacts, and/or they most closely resemble the original.

Evaluation of the quantization parameters (QP) may be done by performing a statistical analysis. For a (*e.g.*, each) macroblock in a given repeated field (*e.g.*, B1' or B1'' of FIG. 10), the quantization parameter used to encode DCT coefficients may be determined. The QP may be different on a per-macroblock basis. The mean QP over one or more (*e.g.*, all) macroblocks of a repeated field may be determined. The repeated field that has lowest mean QP may be selected as the repeated field that minimizes distortion.

The repeated field that minimizes distortion may be selected based on prediction type. When repeated fields are part of a mixed or dirty frame, the selection of the repeated field that minimizes distortion (*e.g.,* deselection of the superfluous field) may be done based on the prediction type used on the field. For example, a field and/or frame may be intracoded or non-intracoded (*e.g.*, motion compensated). A non-intracoded field may be cleaner because it is predicted from a reference field and may be a closer representation of the original. Prediction type may be signaled at the picture (*e.g.,* field) level, and such signaling in the encoded bitstream may be analyzed to determine the selected field based on the prediction type of each of the detected repeated fields.

A repeated field that minimizes distortion may be determined based on a macroblock level selection process. For example, a new field may be constructed by piecing together selected macroblocks from two or more different repeated fields. For example, the corresponding macroblocks of the different repeated fields may be compared against each other and the macroblock that is expected to most closely resemble the original progressive video sequence may be selected for use in the construction of the new field. The new field may then be used to reconstruct the original progressive video sequence. The comparison between the corresponding macroblocks of the different repeated fields may be done using MSE, QP, and/or prediction type comparisons, for example, as described herein.

As an example of macroblock comparison, a pair of repeated frames B1' and B1" may be detected as illustrated in FIG. 10, and a best reference frame may be determined. Techniques for determining repeated frames and for selecting a best reference frame for a detected set of repeated frames are described herein. The field B1* for use in reconstructing the original progressive video frame may then be constructed by macroblock level comparison and selection from the two detected repeated frames. For example, each macroblock B1*(n) of B1* may be selected as either the corresponding macroblock from B1' or as the corresponding macroblock from B1" according to the following comparison (Equation 4):

$$B1^{*}(n) = \begin{cases} B1'(n) \ if \ MSE \left(best \ reference(n), B1'(n)\right) \leq MSE \left(best \ reference(n), B1''(n)\right) \\ B1''(n) \ if \ MSE \left(best \ reference(n), B1'(n)\right) > MSE \left(best \ reference(n), B1''(n)\right) \end{cases}$$

Equation 4

Instead of selecting a single best reference field to use for comparison with the macroblocks of the determined repeated frames, a best reference macroblock may be determined for use in the determination of each of the macroblocks B1*(n). For example, Equation 2 may be applied at the macroblock level in order to determine each best reference macroblock (*e.g.*, "best reference(n)") given the corresponding macroblocks B1'(n) and B1"(n) of the repeated fields. The corresponding macroblocks of a set of surrounding fields of the same parity, opposite parity, and/or both parities may be searched to find the corresponding macroblock which has the least distortion (*e.g.*, least MSE) when compared to corresponding macroblocks B1'(n) and B1"(n) of the repeated fields.

As an example of macroblock comparison, a pair of repeated frames B1' and B1" may be detected (*e.g.*, as illustrated in FIG. 10), and the field B1* for use in reconstructing the original progressive video frame may then be constructed by macroblock level comparison of quantization parameters (*e.g.*, QP Scale parameters) and/or prediction type. In the case of quantization parameter comparison, a macroblock B1*(n) may be selected as the corresponding macroblock B1'(n) or as the corresponding macroblock B1"(n), for example, depending on which of these corresponding macroblocks has a finger quantization, or equivalently has smaller QP scale parameters. A finer quantization and/or a smaller QP scale may indicate that the macroblock is closer in a distortion sense to the data from the original progressive video sequence, and therefore, such macroblocks may be selected for inclusion in B1*. In the case of prediction type comparison, a macroblock B1*(n) may be selected as the corresponding macroblock B1'(n) or as the corresponding macroblock B1"(n), for example, depending on the prediction types with which these corresponding macroblocks were encoded in the video bitstream. A macroblock coded using a P or B prediction type may, for example, be selected over a macroblock coded using an I prediction type, since P or B prediction type may indicate that the macroblock is closer in a distortion sense to the original progressive video sequence.

Post-filtering may be performed after inverse telecine is performed. Once the original progressive frames are reconstructed, a post-filter may be applied to remove artifacts that might have been introduced by interlaced encoding of the content. For example, if it is determined that fields belonging to different frames were coded as picture frames by codecs such as MPEG-2, then there may be significant noise at Nyquist vertically in the reconstructed progressive frames. A vertical low-pass filter with a cut-off frequency (fc) set below Nyquist may be applied.

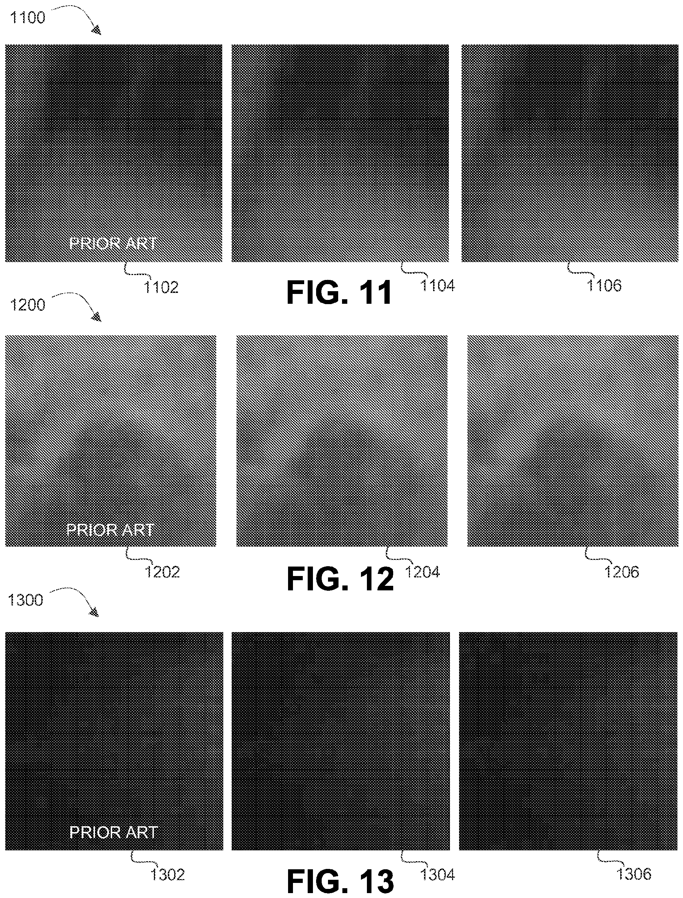

FIG. 11 is a diagram 1100 of an example of a prior-art inverse telecine 1102, an inverse telecine as described herein 1104, and an inverse telecine as described herein with post-filtering 1106 (fc = 0.5).

FIG. 12 is a diagram 1200 of an example of a prior-art inverse telecine 1202, an inverse telecine as described herein 1204, and an inverse telecine as described herein with post-filtering 1206 (fc = 0.5).

FIG. 13 is a diagram 1300 of an example of a prior-art inverse telecine 1302, an inverse telecine as described herein 1304, and an inverse telecine as described herein with post-filtering 1306 (fc = 0.5).

Although features and elements are described above in particular combinations, one of ordinary skill in the art will appreciate that each feature or element can be used alone or in any combination with the other features and elements.

In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method of video filtering, comprising:

   receiving and decoding an encoded video sequence comprising a plurality of fields, wherein a field is one of an even parity field and an odd parity field, wherein at least one field of the plurality of fields is a superfluous field;
   comparing each field to at least one temporally adjacent field of the same parity;
   determining a pair of fields which are most similar to each other, wherein the pair of fields comprise the superfluous field;
   determining which of the pair of fields is the superfluous field by determining which of the pair of fields is least similar to a respective temporally adjacent field that is not the other of the pair of fields; and
   reconstructing the video sequence without the determined superfluous field.

2. The method of claim 1, wherein the reconstructed video sequence has less distortion than if the superfluous field were used.

3. The method of claim 1, further comprising applying a filter to remove an artifact.

4. The method of claim 1, wherein the respective temporally adjacent field is of a same parity as the pair of fields.

5. The method of claim 1, wherein the respective temporally adjacent field is of an opposite parity as the pair of fields.

6. The method of claim 1, wherein the pair of fields most similar to each other are those with the lowest mean squared error.

7. The method of claim 1, wherein the superfluous field has a higher mean squared error with respect to its respective temporally adjacent field.

8. The method of claim 1, wherein the superfluous field has a higher mean quantization scale parameter to its respective temporally adjacent field.

9. The method of claim 1, wherein the superfluous field is a field within the pair that has been motion compensated.

10. The method of claim 1, further comprising determining a pattern of superfluous fields in the video sequence.

11. A method of video filtering, comprising:

    receiving a plurality of frames comprising a series of fields, wherein at least one field of the series of fields is a superfluous field;
    comparing each field to at least one temporally adjacent field to determine a pair of fields which are most similar to each other, wherein the pair of fields comprise the superfluous field;
    determining which of the pair of fields is least similar to a respective temporally adjacent field that is not the other of the pair of fields and designating that field the superfluous field; and
    reconstructing the plurality of frames without the determined superfluous field.

12. The method of claim 11, wherein the plurality of frames are an encoded video sequence.

13. The method of claim 12, further comprising receiving and decoding the encoded video sequence.

**14.** A server, comprising:

a processor configured to:

receive and decode an encoded video sequence comprising a plurality of fields, wherein a field is one of an even parity field and an odd parity field, wherein at least one field of the plurality of fields is a superfluous field;
compare each field to at least one temporally adjacent field of the same parity;
determine a pair of fields which are most similar to each other, wherein the pair of fields comprise the superfluous field;
determine which of the pair of fields is the superfluous field, wherein the superfluous field is least similar to a respective temporally adjacent field that is not the other of the pair of fields;
reconstruct the video sequence without the determined superfluous field; and
re-encode the reconstructed video sequence.

**15.** A display apparatus, comprising:

a processor configured to:

receive and decode an encoded video sequence comprising a plurality of fields, wherein a field is one of an even parity field and an odd parity field, wherein at least one field of the plurality of fields is a superfluous field;
compare each field to at least one temporally adjacent field of the same parity;
determine a pair of fields which are most similar to each other, wherein the pair of fields comprise the superfluous field;
determine which of the pair of fields is the superfluous field, wherein the superfluous field is least similar to a respective temporally adjacent field that is not the other of the pair of fields;
reconstruct the video sequence without the determined superfluous field; and
display the reconstructed video sequence.

**Patentansprüche**

**1.** Verfahren zur Videofilterung, Folgendes umfassend:

Empfangen und Decodieren einer codierten Videosequenz, die mehrere Felder umfasst, wobei ein Feld ein Feld gerader Parität oder ein Feld ungerader Parität ist, wobei mindestens ein Feld der mehreren Felder ein überflüssiges Feld ist;
Vergleichen jedes Felds mit mindestens einem zeitlich angrenzenden Feld derselben Parität;
Bestimmen eines Paars von Feldern, die einander am ähnlichsten sind, wobei das Paar der Felder das überflüssige Feld umfasst;
Bestimmen, welches des Paars der Felder das überflüssige Feld ist, indem bestimmt wird, welches des Paars der Felder einem jeweiligen zeitlich angrenzenden Feld am wenigsten ähnlich ist, das nicht das andere des Paars der Felder ist; und
Rekonstruieren der Videosequenz ohne das bestimmte überflüssige Feld.

**2.** Verfahren nach Anspruch 1, wobei die rekonstruierte Videosequenz weniger Verzerrung aufweist, als wenn das überflüssige Feld verwendet worden wäre.

**3.** Verfahren nach Anspruch 1, darüber hinaus umfassend, ein Filter anzulegen, um ein Artefakt zu entfernen.

**4.** Verfahren nach Anspruch 1, wobei das jeweilige zeitlich angrenzende Feld von derselben Parität ist wie das Paar der Felder.

**5.** Verfahren nach Anspruch 1, wobei das jeweilige zeitlich angrenzende Feld von einer entgegengesetzten Parität ist wie das Paar der Felder.

**6.** Verfahren nach Anspruch 1, wobei das Paar der einander am ähnlichsten Felder diejenigen mit der geringsten mittleren quadratischen Abweichung sind.

7. Verfahren nach Anspruch 1, wobei das überflüssige Feld eine höhere mittlere quadratische Abweichung in Bezug auf sein jeweiliges zeitlich angrenzendes Feld hat.

8. Verfahren nach Anspruch 1, wobei das überflüssige Feld einen höheren mittleren Quantisierungsmaßstabparameter zu seinem jeweiligen zeitlich angrenzenden Feld hat.

9. Verfahren nach Anspruch 1, wobei es sich bei dem überflüssigen Feld um ein Feld in dem Paar handelt, das bewegungskompensiert wurde.

10. Verfahren nach Anspruch 1, darüber hinaus umfassend, ein Muster überflüssiger Felder in der Videosequenz zu bestimmen.

11. Verfahren zur Videofilterung, Folgendes umfassend:

Empfangen mehrerer Bilder, die eine Reihe von Feldern umfassen, wobei mindestens ein Feld der Reihe von Feldern ein überflüssiges Feld ist;
Vergleichen jedes Felds mit mindestens einem zeitlich angrenzenden Feld, um ein Paar von Feldern zu bestimmen, die einander am ähnlichsten sind, wobei das Paar der Felder das überflüssige Feld umfasst;
Bestimmen, welches des Paars der Felder einem jeweiligen zeitlich angrenzenden Feld am wenigsten ähnlich ist, das nicht das andere des Paars der Felder ist, und das Feld als das überflüssige Feld zu bezeichnen; und
Rekonstruieren der mehreren Bilder ohne das bestimmte überflüssige Feld.

12. Verfahren nach Anspruch 11, wobei es sich bei den mehreren Bildern um eine codierte Videosequenz handelt.

13. Verfahren nach Anspruch 12, darüber hinaus umfassend, die codierte Videosequenz zu empfangen und zu decodieren.

14. Server, Folgendes umfassend:

einen Prozessor, der dazu konfiguriert ist:

eine codierte Videosequenz zu empfangen und zu decodieren, die mehrere Felder umfasst, wobei ein Feld ein Feld gerader Parität oder ein Feld ungerader Parität ist, wobei mindestens ein Feld der mehreren Felder ein überflüssiges Feld ist;
jedes Feld mit mindestens einem zeitlich angrenzenden Feld derselben Parität zu vergleichen;
ein Paar von Feldern zu bestimmen, die einander am ähnlichsten sind, wobei das Paar der Felder das überflüssige Feld umfasst;
zu bestimmen, welches des Paars der Felder das überflüssige Feld ist, wobei das überflüssige Feld einem jeweiligen zeitlich angrenzenden Feld am wenigsten ähnlich ist, das nicht das andere des Paars der Felder ist;
die Videosequenz ohne das bestimmte überflüssige Feld zu rekonstruieren; und
die rekonstruierte Videosequenz erneut zu codieren.

15. Anzeigevorrichtung, Folgendes umfassend:

einen Prozessor, der dazu konfiguriert ist:

eine codierte Videosequenz zu empfangen und zu decodieren, die mehrere Felder umfasst, wobei ein Feld ein Feld gerader Parität oder ein Feld ungerader Parität ist, wobei mindestens ein Feld der mehreren Felder ein überflüssiges Feld ist;
jedes Feld mit mindestens einem zeitlich angrenzenden Feld derselben Parität zu vergleichen;
ein Paar von Feldern zu bestimmen, die einander am ähnlichsten sind, wobei das Paar der Felder das überflüssige Feld umfasst;
zu bestimmen, welches des Paars der Felder das überflüssige Feld ist, wobei das überflüssige Feld einem jeweiligen zeitlich angrenzenden Feld am wenigsten ähnlich ist, das nicht das andere des Paars der Felder ist;

die Videosequenz ohne das bestimmte überflüssige Feld zu rekonstruieren; und
die rekonstruierte Videosequenz anzuzeigen.

**Revendications**

1. Procédé de filtrage vidéo, comprenant :

   la réception et le décodage d'une séquence vidéo codée comprenant une pluralité de champs, sachant qu'un champ est soit un champ de parité paire soit un champ de parité impaire, sachant qu'au moins un champ de la pluralité de champs est un champ superflu ;
   la comparaison de chaque champ à au moins un champ temporellement adjacent de la même parité ;
   la détermination d'une paire de champs qui sont les plus similaires l'un à l'autre, sachant que la paire de champs comprend le champ superflu ;
   le fait de déterminer quel champ de la paire de champs est le champ superflu en déterminant quel champ de la paire de champs est le moins similaire à un champ temporellement adjacent respectif qui n'est pas l'autre de la paire de champs ; et
   la reconstruction de la séquence vidéo sans le champ superflu déterminé.

2. Le procédé de la revendication 1, sachant que la séquence vidéo reconstruite a moins de distorsion que si le champ superflu était utilisé.

3. Le procédé de la revendication 1, comprenant en outre l'application d'un filtre pour enlever un artéfact.

4. Le procédé de la revendication 1, sachant que le champ temporellement adjacent respectif est d'une même parité que la paire de champs.

5. Le procédé de la revendication 1, sachant que le champ temporellement adjacent respectif est d'une parité opposée à celle de la paire de champs.

6. Le procédé de la revendication 1, sachant que la paire de champs les plus similaires l'un à l'autre sont ceux qui ont l'erreur quadratique moyenne la plus basse.

7. Le procédé de la revendication 1, sachant que le champ superflu a une erreur quadratique moyenne plus élevée par rapport à son champ temporellement adjacent respectif.

8. Le procédé de la revendication 1, sachant que le champ superflu a un paramètre d'échelle de quantification moyenne plus élevé que son champ temporellement adjacent respectif.

9. Le procédé de la revendication 1, sachant que le champ superflu est un champ au sein de la paire qui a été soumis à une compensation de mouvement.

10. Le procédé de la revendication 1, comprenant en outre la détermination d'un motif de champs superflus dans la séquence vidéo.

11. Procédé de filtrage vidéo, comprenant :

    la réception d'une pluralité de trames comprenant une série de champs, sachant qu'au moins un champ de la série de champs est un champ superflu ;
    la comparaison de chaque champ à au moins un champ temporellement adjacent pour déterminer une paire de champs qui sont les plus similaires l'un à l'autre, sachant que la paire de champs comprend le champ superflu ;
    le fait de déterminer quel champ de la paire de champs est le moins similaire à un champ temporellement adjacent respectif qui n'est pas l'autre de la paire de champs et la désignation de ce champ comme étant le champ superflu ; et
    la reconstruction de la pluralité de trames sans le champ superflu déterminé.

12. Le procédé de la revendication 11, sachant que la pluralité de trames est une séquence vidéo codée.

**13.** Le procédé de la revendication 12, comprenant en outre la réception et le décodage de la séquence vidéo codée.

**14.** Serveur, comprenant :

un processeur configuré pour :

recevoir et décoder une séquence vidéo codée comprenant une pluralité de champs, sachant qu'un champ est soit un champ de parité paire soit un champ de parité impaire, sachant qu'au moins un champ de la pluralité de champs est un champ superflu ;
comparer chaque champ à au moins un champ temporellement adjacent de la même parité ;
déterminer une paire de champs qui sont les plus similaires l'un à l'autre, sachant que la paire de champs comprend le champ superflu ;
déterminer quel champ de la paire de champs est le champ superflu, sachant que le champ superflu est le moins similaire à un champ temporellement adjacent respectif qui n'est pas l'autre de la paire de champs ;
reconstruire la séquence vidéo sans le champ superflu déterminé ; et
recoder la séquence vidéo reconstruite.

**15.** Appareil d'affichage, comprenant :

un processeur configuré pour :

recevoir et décoder une séquence vidéo codée comprenant une pluralité de champs, sachant qu'un champ est soit un champ de parité paire soit un champ de parité impaire, sachant qu'au moins un champ de la pluralité de champs est un champ superflu ;
comparer chaque champ à au moins un champ temporellement adjacent de la même parité ;
déterminer une paire de champs qui sont les plus similaires l'un à l'autre, sachant que la paire de champs comprend le champ superflu ;
déterminer quel champ de la paire de champs est le champ superflu, sachant que le champ superflu est le moins similaire à un champ temporellement adjacent respectif qui n'est pas l'autre de la paire de champs ;
reconstruire la séquence vidéo sans le champ superflu déterminé ; et
afficher la séquence vidéo reconstruite.

**FIG. 1A**

EP 3 105 922 B1

115/116/117

102

122

| 120 Transceiver |

| 124 Speaker/ Microphone |

| 134 Power Source |

| 126 Keypad |

| 118 Processor |

| 136 GPS Chipset |

| 128 Display/ Touchpad |

| 138 Peripherals |

| 130 Non-Removable Memory |

| 132 Removable Memory |

# FIG. 1B

FIG. 1C

**FIG. 1D**

EP 3 105 922 B1

**FIG. 1E**

**FIG. 2**

**FIG. 3**

EP 3 105 922 B1

FIG. 4

FIG. 5

**FIG. 6**

**FIG. 7**

800

| Original video | A0 | A1 | B0 | B1 | C0 | B1 | D0 | C1 | D0 | D1 |

Encoding → Transmission or storage → Decoding

| Decoded video | A0' | A1' | B0' | B1' | C0' | B1'' | D0' | C1' | D0'' | D1' |

**FIG. 8**

900

902

| Decoded sequence | A0' | | B0' | | C0' | | D0' | | D0'' |
| | | A1' | | B1' | | B1'' | | C1' | | D1' |

904

**FIG. 9**

FIG. 10

1100

PRIOR ART

1102

**FIG. 11** 1104

1106

1200

PRIOR ART

1202

**FIG. 12** 1204

1206

1300

PRIOR ART

1302

**FIG. 13** 1304

1306

**EP 3 105 922 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5757435 A